# EUROPEAN PATENT SPECIFICATION

(11) **EP 4 357 195 B1**
(45) Date of publication and mention of the grant of the patent: **18.11.2026**
(21) Application number: 22202539.7
(22) Date of filing: 19.10.2022
(51) Int. Cl.: B60N 2/06, B60N 2/14

(54) **SEAT SYSTEM FOR A VEHICLE, VEHICLE COMPRISING A SEAT SYSTEM, AND METHOD FOR OPERATING A SEAT SYSTEM**
SITZSYSTEM FÜR EIN FAHRZEUG, FAHRZEUG MIT EINEM SITZSYSTEM UND VERFAHREN ZUM BETREIBEN EINES SITZSYSTEMS
SYSTÈME DE SIÈGE POUR UN VÉHICULE, VÉHICULE COMPRENANT UN SYSTÈME DE SIÈGE ET PROCÉDÉ DE FONCTIONNEMENT D'UN SYSTÈME DE SIÈGE

(43) Date of publication of application: 24.04.2024
(73) Proprietor: Ningbo Geely Automobile Research & Development Co. Ltd., Hangzhou Bay New District Ningbo 315336 (CN); Zhejiang Geely Holding Group Co., Ltd., Hangzhou, Zhejiang 310051 (CN)
(72) Inventor: JANGID, Aditya, 417 53 GÖTEBORG (SE); CARLSSON, Magnus, 442 52 YTTERBY (SE)
(74) Representative: Zacco Sweden AB

(56) References cited:
- EP-A1- 2 108 539
- US-A- 5 056 849
- US-A1- 2004 256 894

## Description

### TECHNICAL FIELD

The present invention relates to a seat system for a vehicle comprising a vehicle seat and a frame structure, where the frame structure is connected to a vehicle structure. The vehicle seat is pivotably arranged relative to the frame structure around a pivot axis and configured for pivoting around the pivot axis between a first seating position and a second seating position opposite each other. The invention further relates to a vehicle comprising a seat system and a method for operating a seat system for a vehicle.

### BACKGROUND

Vehicle seats that can be arranged in different positions are becoming more and more popular in vehicle applications. A vehicle seat having a pivoting positioning function is enabling flexible vehicle seating solutions.

However, traditional vehicle seat systems with pivoting seat configurations commonly have complex constructions, which may be a drawback when the vehicle seat is exerted to forces in a vehicle impact event. Traditional seatbelt arrangements in connection to the pivoting seat are non-flexible and difficult to adjust when worn by a user of the vehicle for an optimal seatbelt positioning in different vehicle seat pivoting positions. The complex and non-flexible designs are resulting in heavy and costly constructions of the seat systems to achieve desired performance.

There is thus a need for an improved pivoting vehicle seat system having a simple and efficient design that is providing high safety for the user of the vehicle. EP 2108539 discloses a vehicle seat having a pivoting positioning.

### SUMMARY

An object of the present invention is to provide a seat system for a vehicle, a vehicle comprising a seat system, and a method for operating a seat system for a vehicle, where the previously mentioned problems are avoided. This object is at least partly achieved by the features of the independent claims. The dependent claims contain further developments of the seat system.

The invention concerns a seat system for a vehicle comprising a vehicle seat and a frame structure, where the frame structure is connected to a vehicle structure. The vehicle seat is pivotably arranged relative to the frame structure around a pivot axis and configured for pivoting around the pivot axis between a first seating position and a second seating position opposite each other. The vehicle seat comprises a first seat part and a second seat part connected to each other. In the first seating position, the first seat part is forming a backrest and the second seat part is forming a seat platform. In the second seating position, the first seat part is forming a seat platform and the second seat part is forming a backrest. The vehicle seat comprises an integrated first seatbelt system arranged in connection to the first seat part, where the first seatbelt system is configured for being worn by a user of the vehicle in the first seating position. The vehicle seat comprises an integrated second seatbelt system arranged in connection to the second seat part, where the second seatbelt system is configured for being worn by a user of the vehicle in the second seating position. The first seat part comprises a first inner end and a first outer end. The first inner end is arranged in connection to the pivot axis. The second seat part comprises a second inner end and a second outer end. The second inner end is arranged in connection to the pivot axis. The first seatbelt system comprises a first seatbelt integrated in the first seat part. The first seatbelt is extending from a first inner attachment point arranged in the first seat part in connection to the first inner end, to a first outer attachment point arranged in connection to an outer side of the first seat part at the first inner end via the first outer end. The second seatbelt system comprises a second seatbelt integrated in the second seat part. The second seatbelt is extending from a second inner attachment point arranged in the second seat part in connection to the second inner end, to a second outer attachment point arranged in connection to an outer side of the second seat part at the second inner end via the second outer end.

Advantages with these features are that with the two integrated seatbelt systems, the vehicle seat can be made simple in construction without the need for seatbelt anchoring points in the vehicle structure. The integration of the seatbelt systems within the vehicle seat is enabling an efficient design, where the seatbelt systems are flexible to use and simple to adjust when worn by a user of the vehicle, for an optimal seatbelt positioning in different vehicle seat pivoting positions. The pivoting vehicle seat, where the first seating position and the second seating position are arranged opposite each other, allows a user to change direction of seating position, without compromising with safety. The vehicle seat can be made lightweight in construction and simple to adjust compared to traditional solutions. The vehicle seat system design is enabling high safety for the user of the vehicle. The respective inner ends are forming sections of the seat parts connected to the pivot axis, enabling the vehicle seat and the seat parts to pivot around the pivot axis for an efficient and simple design of the seat system. With these seatbelt system configurations, the seatbelts can be fully integrated in the vehicle seats for a highly flexible seating solution.

In one embodiment, the first seat part comprises a first seatbelt channel extending between the first inner attachment point and the first outer end, where the first seatbelt is extending in the first seatbelt channel. The second seat part comprises a second seatbelt channel extending between the second inner attachment point and the second outer end, where the second seatbelt is extending in the second seatbelt channel. The first and second seatbelt channels are forming channel structures inside the respective seat parts in which the corresponding seatbelts are allowed to run freely when being used.

In one embodiment, the first inner attachment point is arranged as a seatbelt retractor configured for retracting and releasing the first seatbelt, and the second inner attachment point is arranged as a seatbelt retractor configured for retracting and releasing the second seatbelt. The seatbelt retractors are used for a simple and efficient handling of the seatbelts, where the seatbelts can be easily released and retracted when used. With the seatbelt retractors, the first seatbelt can be retracted and released within in the first seatbelt channel from the seatbelt retractor forming the first inner attachment point, and the second seatbelt can be retracted and released within in the second seatbelt channel from the seatbelt retractor forming the second inner attachment point.

In one embodiment, the vehicle seat comprises a seatbelt lock arranged on a lateral side of the vehicle seat in connection to the pivot axis. The seatbelt lock is configured for releasably connecting the first seatbelt in the first seating position and releasably connecting the second seatbelt in the second seating position.

In one embodiment, the seatbelt lock is positioned in connection to the pivot axis and arranged on an opposite lateral side of the vehicle seat relative to the first outer attachment point and the second outer attachment point. The seatbelt lock is with this positioning efficiently used for both the first seatbelt and the second seatbelt in the respective seating positions.

In one embodiment, the vehicle seat comprises a first outer seat section attached to the first outer end of the first seat part. The first outer seat section is pivotably arranged relative to the first seat part, and the first outer seat section is forming a headrest in the first seating position. The vehicle seat comprises a second outer seat section attached to the second outer end of the second seat part. The second outer seat section is pivotably arranged relative to the second seat part, and the second outer seat section is forming a headrest in the second seating position. The outer seat sections are in this way adjustable relative to the corresponding seat parts for an efficient positioning of the adjustable headrest in the respective seating positions.

In one embodiment, each of the first seat part and the second seat part is pivotably arranged relative to the frame structure around the pivot axis. The pivotably arranged seat parts are providing a flexible seating solution allowing different seating positions for the user of the vehicle when seated in the vehicle seat.

In one embodiment, the first seat part is individually adjustable relative to the frame structure and relative to the second seat part. The second seat part is individually adjustable relative to the frame structure and relative to the first seat part. This is enabling an efficient adjustment of the seat parts independently of each other. The first seat part and the second seat part are individually adjustable relative to each other for a flexible seating solution. The seat part functioning as the backrest may be adjustable around the pivot axis relative to the seat part functioning as seat platform and vice versa.

In one embodiment, the seat system further comprises a first main actuator and a second main actuator arranged in the vehicle seat. The first main actuator is configured for enabling the individual adjustment of the first seat part relative to the frame structure around the pivot axis. The second main actuator is configured for enabling the individual adjustment of the second seat part relative to the frame structure around the pivot axis. The main actuators are providing an efficient adjustment of the seat parts relative to the frame structure around the pivot axis.

In one embodiment, the first main actuator is arranged as an electric motor, and the second main actuator is arranged as an electric motor. The electric motors are providing a simple and efficient individual adjustment of the first and second seat parts relative to the frame structure around the pivot axis.

In one embodiment, the first seat part comprises a first inner sub-section and a first outer sub-section pivotably arranged relative to each other, and/or the second seat part comprises a second inner sub-section and a second outer sub-section pivotably arranged relative to each other. This adjustable configuration is enabling individual positioning of the respective first seat parts when forming the backrest or the seat platform in the respective seating positions, for a flexible seating solution allowing different seating positions for the user of the vehicle when seated in the vehicle seat. In one embodiment, the frame structure is connected to the vehicle structure via a rail structure. The rail structure enables a mechanical sliding connection between the frame structure with the vehicle seat and the vehicle structure. Suitably, the rail structure comprises two interconnected rail parts that are linearly slidable relative to each other, where a lower rail is stationary attached to the vehicle structure and an upper rail is fastened to the frame structure. The upper rail may be movably arranged in relation to the lower rail in a longitudinal direction of the vehicle, for a convenient adjustment and positioning of the vehicle seat in relation to the vehicle structure. Usually, two parallel rail structures are used for holding one vehicle seat.

The invention further concerns a vehicle comprising a seat system as described above.

The invention further concerns a method for operating a seat system of a vehicle as described above. The method comprises the steps: arranging the vehicle seat in the first seating position for enabling usage of the first seatbelt system, or arranging the vehicle seat in the second seating position for enabling usage of the second seatbelt system.

Advantages with these steps are that with the two integrated seatbelt systems, the vehicle seat can be made simple in construction without the need for seatbelt anchoring points in the vehicle structure. The integration of the seatbelt systems within the vehicle seat is enabling an efficient design, where the seatbelt systems are flexible to use and simple to adjust when worn by a user of the vehicle, for an optimal seatbelt positioning in different vehicle seat pivoting positions. The pivoting vehicle seat, where the first seating position and the second seating position are arranged opposite each other allows a user to change direction of seating position, without compromising with safety.

### BRIEF DESCRIPTION OF DRAWINGS

The invention will be described in detail in the following, with reference to the attached drawings, in which
- Fig. 1a-b: show schematically, in side views, a vehicle with a seat system having a vehicle seat arranged in a forwards position and in a rearwards position,
- Fig. 2a-c: show schematically, in side views, the seat system with the vehicle seat arranged in a first seating position, in an intermediate position, and in a second seating position,
- Fig. 3a-b: show schematically, in perspective views, the seat system with the vehicle seat arranged in the first seating position and in the second seating position, and
- Fig. 4a-b: show schematically, in a perspective view and in a side view, an internal configuration of the vehicle seat.

### DESCRIPTION OF EXAMPLE EMBODIMENTS

Various aspects of the invention will hereinafter be described in conjunction with the appended drawings to illustrate and not to limit the invention, wherein like designations denote like elements, and variations of the described aspects are not restricted to the specifically shown embodiments, but are applicable on other variations of the invention.

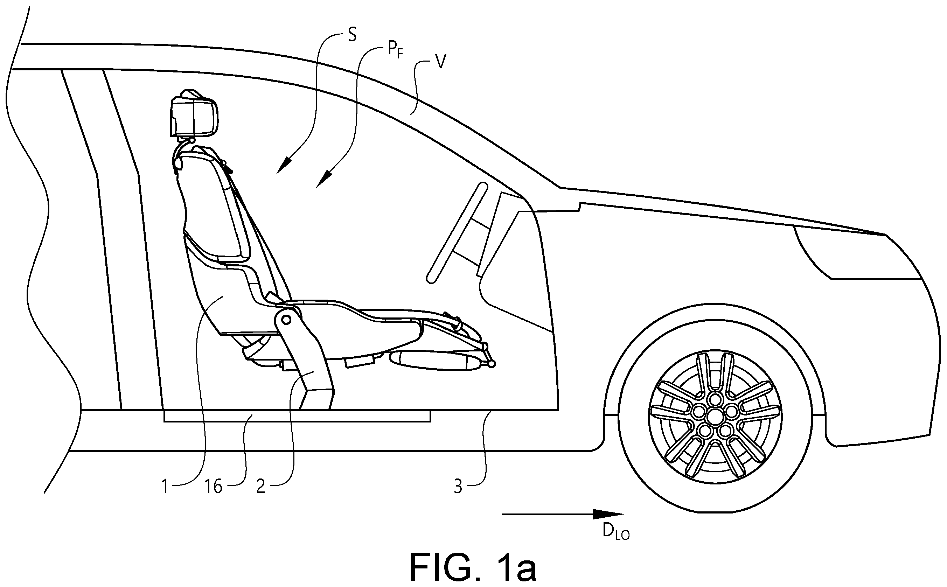

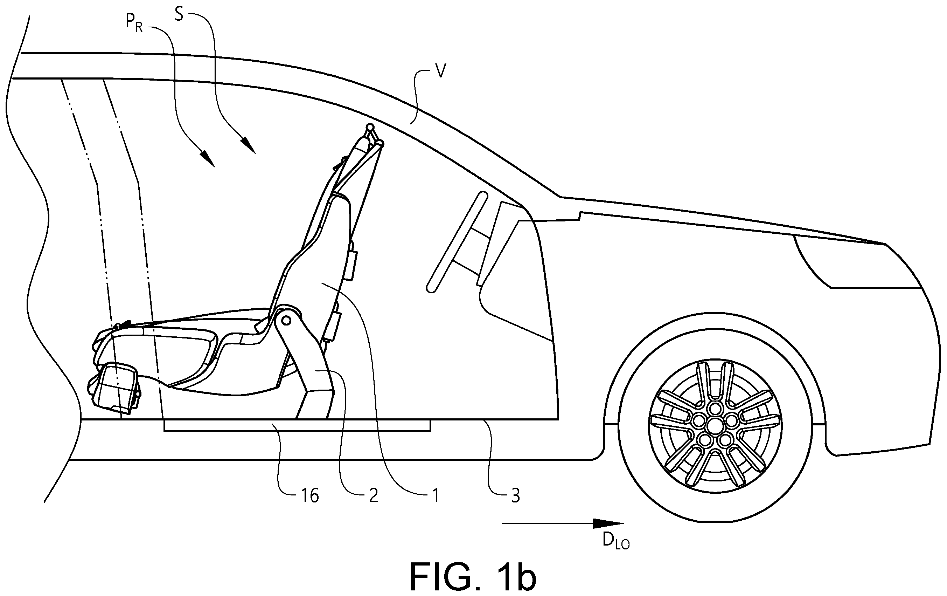

Figures 1a-b schematically shows a vehicle V with a seat system S. The seat system S comprises a vehicle seat 1 attached to a frame structure 2, and the frame structure 2 is connected to a vehicle structure 3. In the shown embodiment, the vehicle structure 3 is a floor structure of an interior compartment of the vehicle V. However, the vehicle structure 3 may be any suitable floor structure or other suitable structural part of the vehicle V, such as a sill structure, a side structure, or a combination of different interior vehicle structures. In figures 1a-b, the seat system S is illustrated in connection to a front vehicle seat, but the seat system S may be used also for other vehicle seats. In figure 1a, the vehicle seat 1 is arranged in a forwards position P_{F}, and in figure 1b, the vehicle seat 1 is arranged in a rearwards position P_{R}.

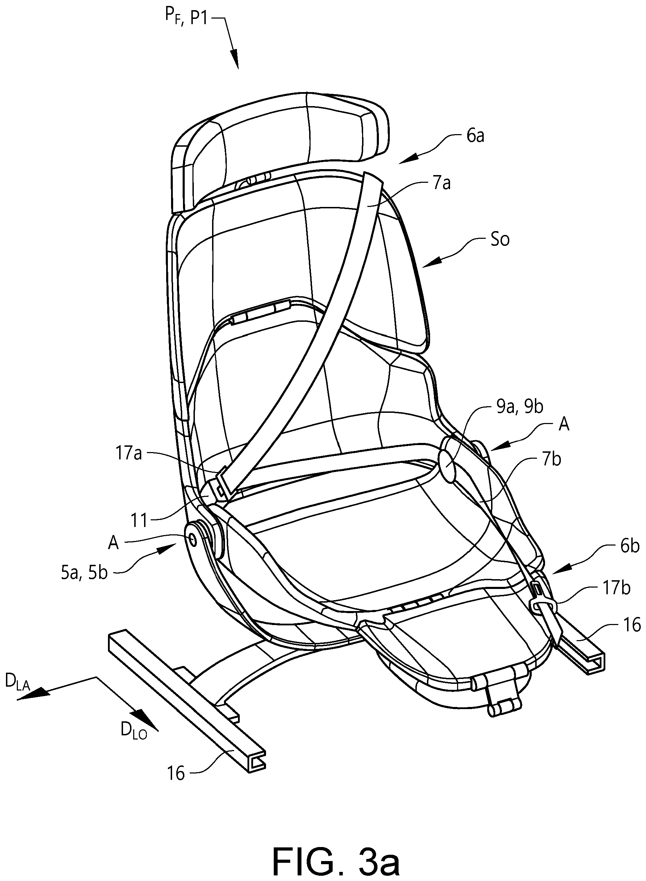

The frame structure 2 is in the illustrated embodiment connected to the vehicle structure 3 via a rail structure 16 as shown in figures 1a-b, 2a-c, 3a-b and 4a-b. The rail structure 16 enables a mechanical sliding connection between the frame structure 2 with the vehicle seat 1 and the vehicle structure 3. Suitably, the rail structure 16 comprises two interconnected rail parts that are linearly slidable relative to each other, where a lower rail is stationary attached to the vehicle structure 3 and an upper rail is fastened to the frame structure 2. The upper rail may be movably arranged in relation to the lower rail in a longitudinal direction D_{LO} of the vehicle V, for a convenient adjustment and positioning of the vehicle seat 1 in relation to the vehicle structure 3. Usually, two parallel rail structures 16 are used for holding one vehicle seat 1, as shown in for example figures 3a-b. The frame structure 2 with the vehicle seat 1 may suitably be moved along the rail structures 16 by means of an electric motor or similar actuating device. In other embodiments, the frame structure 2 with the vehicle seat 1 may be manually adjusted along the rail structures 16.

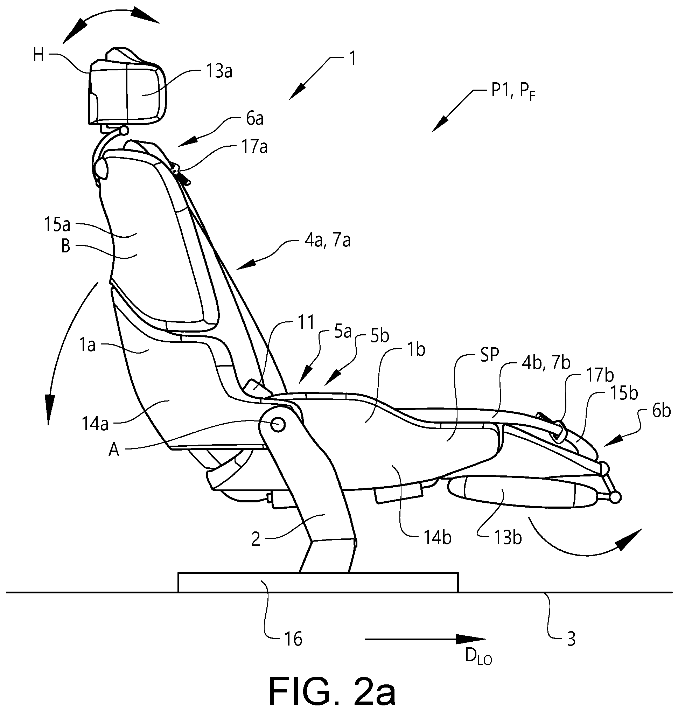

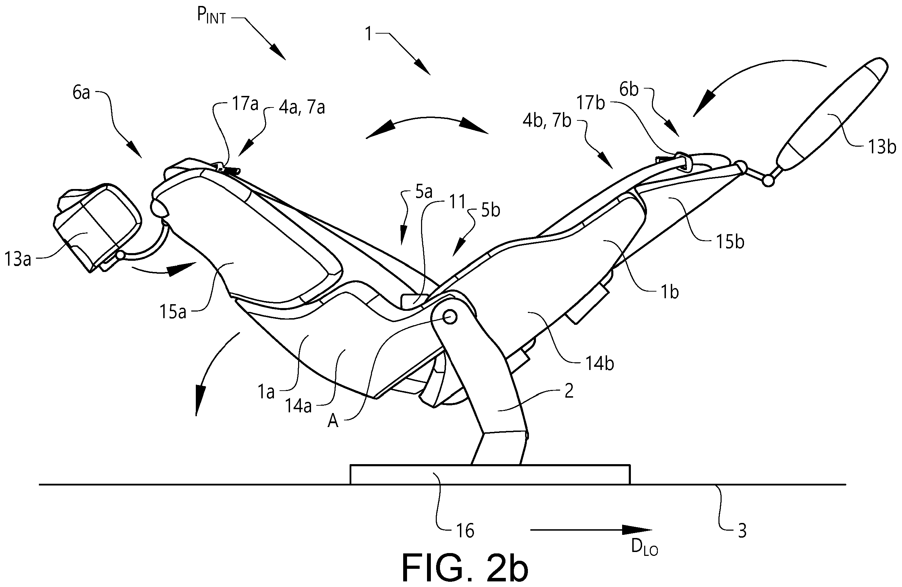

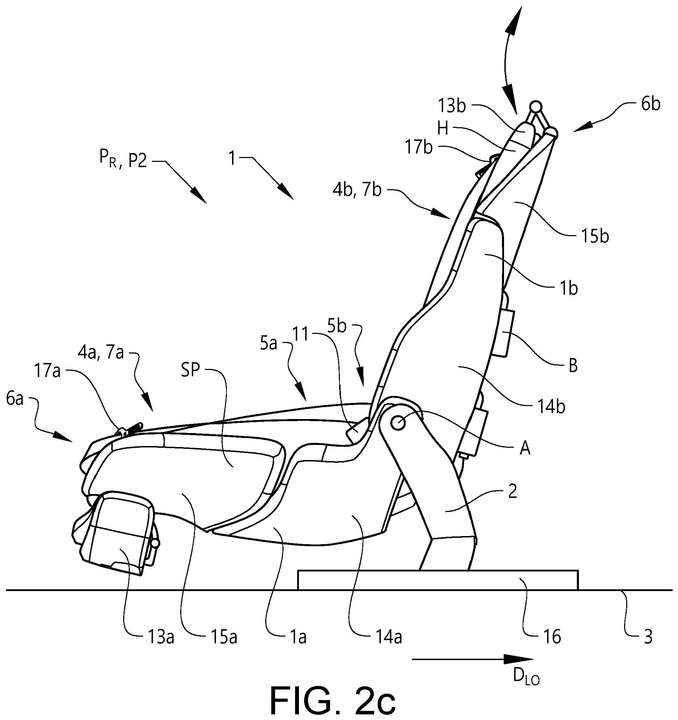

As illustrated in figures 2a-b, the vehicle seat 1 is pivotably arranged relative to the frame structure 2 around a pivot axis A. The vehicle seat 1 is arranged for pivoting around the pivot axis A between a first seating position P1, as shown in figures 1a and 2a, and a second seating position P2, as shown in figures 1b and 2c. In the illustrated embodiment, the vehicle seat 1 is attached to the frame structure 2 in two pivoting points on each lateral side of the vehicle seat forming the pivot axis A, where lateral is referring to a lateral direction D_{LA} perpendicular to the longitudinal direction D_{LO}. In figure 2b, an intermediate position P_{INT} of the vehicle seat 1 between the first seating position P1 and the second seating position P2 is schematically illustrated. The vehicle seat 1 has a shape that allows the vehicle seat 1 to pivot around the pivot axis A without interfering with the frame structure 2.

As understood from the figures, the first seating position P1 and the second seating position P2 are arranged opposite each other. In the illustrated embodiment, the first seating position P1 is corresponding to the forwards position P_{F} and the second seating position is corresponding to the rearwards position P_{R}. The forwards position P_{F} is a position of the vehicle seat 1, in which a user of the vehicle V is seated in a forwards facing position suitable for driving or operating the vehicle. The rearwards position P_{R} is a position of the vehicle seat 1, in which a user of the vehicle V is seated in a rearwards facing position. The rearwards position P_{R} is arranged opposite to the forwards position P_{F}, or essentially opposite the forwards position P_{F}. The vehicle seat 1 may be enabled to adopt any pivoting position around the pivot axis A between the first position P1 and the second position P2.

As shown in for example figures 2a-c, the vehicle seat 1 comprises a first seat part 1a and a second seat part 1b connected to each other. In the first seating position P1, the first seat part 1a is forming a backrest B and the second seat part 1b is forming a seat platform SP. In the second seating position P2, the first seat part 1a is forming a seat platform SP and the second seat part 1b is forming a backrest B. As described above, the vehicle seat 1 has a shape that allows the vehicle seat 1 to rotate around the pivot axis A without interfering with the frame structure 2, and the seat parts of the vehicle seat 1 forming the backrest B in the first position P1 and second position P2 can pivot without interfering with the frame structure 2.

The first seat part 1a comprises a first inner end 5a and a first outer end 6a, and the first inner end 5a is arranged in connection to the pivot axis A. The second seat part 1b comprises a second inner end 5b and a second outer end 6b, and the second inner end 5b is arranged in connection to the pivot axis A.

Each of the first seat part 1a and the second seat part 1b is in the illustrated embodiment pivotably arranged relative to the frame structure 2 around the pivot axis A. Further, the first seat part 1a is suitably individually adjustable relative to the frame structure 2 and relative to the second seat part 1b. The second seat part 1b is suitably individually adjustable relative to the frame structure 2 and relative to the first seat part 1a. This adjustable configuration is enabling individual positioning of the first seat part 1a and the second seat part 1b relative to each other for a flexible seating solution allowing different seating positions for the user of the vehicle V when seated in the vehicle seat 1, where the seat part functioning as the backrest B may be adjustable around the pivot axis A relative to the seat part functioning as seat platform SP and vice versa.

As shown in for example figures 2a-c, the vehicle seat 1 further comprises a first outer seat section 13a attached to the first outer end 6a of the first seat part 1a. The first outer seat section 13a is pivotably arranged relative to the first seat part 1a, as indicated with the arrow in figure 2a. The first outer section 13a and the first outer end 6a of the first seat part 1a are suitably connected to each other via a pivoting joint, enabling adjustment of the first outer seat section 13a in different positions. The first outer seat section 13a is in this way forming an adjustable headrest H in the first seating position P1. The first outer section 13a may be manually adjustable relative to the first seat part 1a, or alternatively the first outer section 13a may be adjustable relative to the first seat part 1a via suitable actuator means enabling an efficient positioning of the adjustable headrest H in the first seating position P1. The actuator may be arranged as an electric motor or a linear actuator integrated in the first seat part 1a or in the first outer section 13a.

As shown in for example figures 2a-c, the vehicle seat 1 further comprises a second outer seat section 13b attached to the second outer end 6b of the second seat part 1b. The second outer seat section 13b is pivotably arranged relative to the second seat part 1b as indicated with the arrow in figure 2c. The second outer section 13b and the second outer end 6b of the second seat part 1b are suitably connected to each other via a pivoting joint, enabling adjustment of the second outer seat section 13b in different positions. The second outer seat section 13b is in this way forming an adjustable headrest H in the second seating position P2. The second outer section 13b may be manually adjustable relative to the second seat part 1b, or alternatively the second outer section 13b may be adjustable relative to the second seat part 1b via suitable actuator means enabling an efficient positioning of the adjustable headrest H in the second seating position P2. The actuator may be arranged as an electric motor or a linear actuator integrated in the second seat part 1b or in the second outer section 13b.

As shown in for example figures 2a-c, the first seat part 1a comprises a first inner sub-section 14a and a first outer sub-section 15a pivotably arranged relative to each other. In this way, the first inner sub-section 14a and the first outer sub-section 15a are individually adjustable relative to each other. This adjustable configuration is enabling individual positioning of the first seat part 1a, when forming the backrest B or the seat platform SP in the respective seating positions, for a flexible seating solution allowing different seating positions for the user of the vehicle V when seated in the vehicle seat 1. The first inner sub-section 14a and the first outer sub-section 15a are suitably connected to each other via a pivoting joint for manual adjustment, or electrical adjustment via suitable actuator means enabling an efficient positioning of the sub-sections relative to each other.

As shown in for example figures 2a-c, the second seat part 1b comprises a second inner sub-section 14b and a second outer sub-section 15b pivotably arranged relative to each other. In this way, the second inner sub-section 14b and the second outer sub-section 15b are individually adjustable relative to each other. This adjustable configuration is enabling individual positioning of the second seat part 1b, when forming the backrest B or the seat platform SP in the respective seating positions, for a flexible seating solution allowing different seating positions for the user of the vehicle V when seated in the vehicle seat 1. The second inner sub-section 14b and the second outer sub-section 15b are suitably connected to each other via a pivoting joint for manual adjustment, or electrical adjustment via suitable actuator means enabling an efficient positioning of the sub-sections relative to each other.

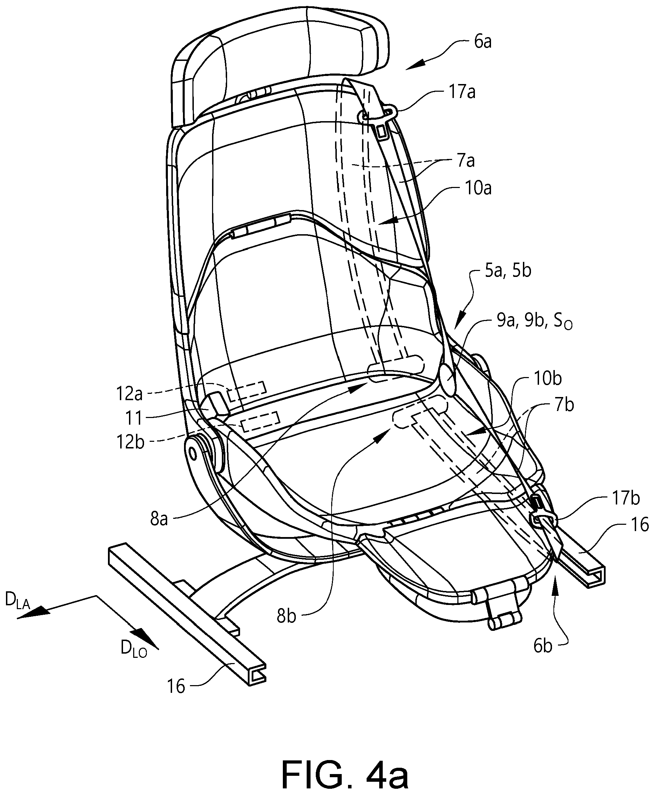

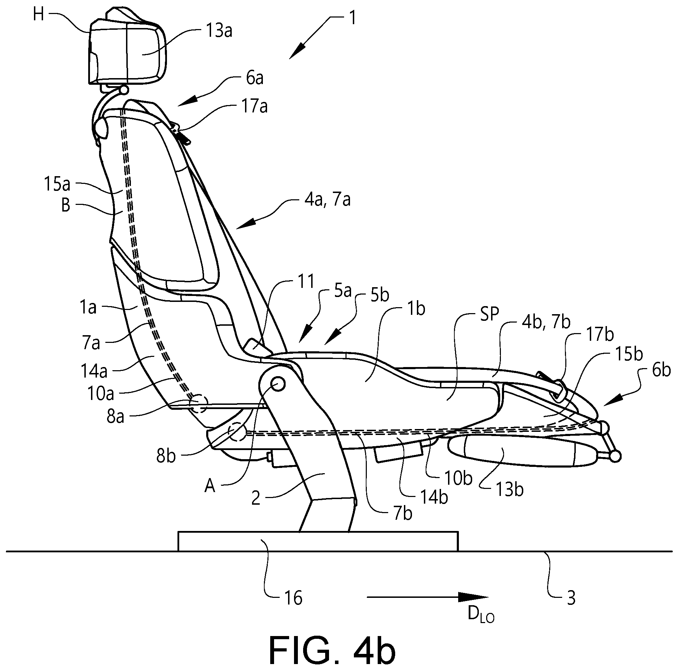

The seat system S further comprises a first main actuator 12a and a second main actuator 12b arranged in the vehicle seat 1. The first main actuator 12a is configured for enabling the individual adjustment of the first seat part 1a relative to the frame structure 2 around the pivot axis A. The second main actuator 12b is configured for enabling the individual adjustment of the second seat part 1b relative to the frame structure 2 around the pivot axis A. Suitably, the first main actuator 12a and the second main actuator 12b are arranged as electric motors integrated in the vehicle seat 1, where the first main actuator 12a is integrated in the first seat part 1a and the second main actuator is integrated in the second seat part 1b, as schematically indicated in figure 4a.

The vehicle seat 1 is suitably connected to a control unit for controlling the positioning of the vehicle seat 1.

The vehicle seat 1 comprises an integrated first seatbelt system 4a arranged in connection to the first seat part 1a, as shown in for example figures 2a-c, 3a-b and 4a-b, and the first seatbelt system 4a is configured for being worn by a user of the vehicle V in the first seating position P1.

The first seatbelt system 4a comprises a first seatbelt 7a integrated in the first seat part 1a. The first seatbelt 7a is extending from a first inner attachment point 8a arranged in the first seat part 1a in connection to the first inner end 5a to a first outer attachment point 9a via the first outer end 6a. As shown in figure 4a, the first inner attachment point 8a is arranged within the first seat part 1a, and the first inner attachment point 8a is establishing a firm connection between the first seatbelt 7a and the first seat part 1a for a secure inner anchoring of the first seatbelt 7a to the vehicle seat 1. The first inner attachment point 8a is suitably arranged as a seatbelt retractor, enabling a rolled-up configuration of the inner part of the first seatbelt 7a for retracting and releasing the first seatbelt 7a. The first outer attachment point 9a is arranged in connection to an outer side S_{O} of the first seat part 1a at the first inner end 5a. The first outer attachment point 9a is establishing a firm connection between the first seatbelt 7a and the first seat part 1a for a secure outer anchoring of the first seatbelt 7a to the vehicle seat 1.

The first seat part 1a comprises a first seatbelt channel 10a extending between the first inner attachment point 8a and the first outer end 6a, and the first seatbelt 7a is extending in the first seatbelt channel 10a, as shown in figures 4a-b. The first seatbelt channel 10a is forming a channel structure inside the first seat part 1a in which the first seatbelt 7a is allowed to run freely when retracted into the seatbelt retractor or released from the seatbelt retractor. In this way, the first seatbelt 7a can be retracted and released within in the first seatbelt channel 10a from the seatbelt retractor forming the first inner attachment point 8a.

The vehicle seat 1 comprises an integrated second seatbelt system 4b arranged in connection to the second seat part 1b, as shown in for example figures 2a-c, 3a-b and 4a-b, and the second seatbelt system 4b is configured for being worn by a user of the vehicle V in the second seating position P2.

The second seatbelt system 4b comprises a second seatbelt 7b integrated in the second seat part 1b. The second seatbelt 7b is extending from a second inner attachment point 8b arranged in the second seat part 1b in connection to the second inner end 5b to a second outer attachment point 9b via the second outer end 6b. As shown in figure 4a, the second inner attachment point 8b is arranged within the second seat part 1b, and the second inner attachment point 8b is establishing a firm connection between the second seatbelt 7b and the second seat part 1b for a secure inner anchoring of the second seatbelt 7b to the vehicle seat 1. The second inner attachment point 8b is suitably arranged as a seatbelt retractor, enabling a rolled-up configuration of the inner part of the second seatbelt 7b for retracting and releasing the second seatbelt 7b. The second outer attachment point 9b is arranged in connection to an outer side S_{O} of the second seat part 1b at the second inner end 5b. The second outer attachment point 9b is establishing a firm connection between the second seatbelt 7b and the second seat part 1b for a secure outer anchoring of the second seatbelt 7b to the vehicle seat 1.

The second seat part 1b comprises a second seatbelt channel 10b extending between the second inner attachment point 8b and the second outer end 6b, and the second seatbelt 7b is extending in the second seatbelt channel 10b, as shown in figures 4a-b. The second seatbelt channel 10b is forming a channel structure inside the second seat part 1b in which the second seatbelt 7b is allowed to run freely when retracted into the seatbelt retractor or released from the seatbelt retractor. In this way, the second seatbelt 7b can be retracted and released within in the second seatbelt channel 10b from the seatbelt retractor forming the second inner attachment point 8b.

In the illustrated embodiment, the first outer attachment point 9a and the second outer attachment point 9b are arranged as a common anchoring point for the first seatbelt 7a and the second seatbelt 7b. It should however be understood that in other non-illustrated embodiments, the first outer attachment point 9a and the second outer attachment point 9b may be arranged separated from each other.

As shown in the figures, the vehicle seat 1 comprises a seatbelt lock 11 arranged on a lateral side of the vehicle seat 1 in connection to the pivot axis A. As understood from for example figures 3a-b, the seatbelt lock 11 is used for connecting both the first seatbelt 7a and the second seatbelt 7b, and the seatbelt lock 11 is arranged on an opposite lateral side from the first outer attachment point 9a and the second outer attachment point 9b. The seatbelt lock 11 is configured for releasably connecting the first seatbelt 7a in the first seating position P1 and releasably connecting the second seatbelt 7b in the second seating position P2. The seatbelt lock 11 is positioned in connection to the pivot axis A and arranged on an opposite lateral side of the vehicle seat 1 relative to the first outer attachment point 9a and the second outer attachment point 9b, for a convenient attachment of the first seatbelt 7a or the second seatbelt 7b respectively.

A first seatbelt lock tongue 17a is arranged on the first seatbelt 7a, and the first seatbelt lock tongue 17a is configured for being releasably connected to the seatbelt lock 11 in the first seating position P1, as illustrated in figure 3a. In this way, the first seatbelt 7a is configured for being releasably connected to the seatbelt lock 11 via the first seatbelt lock tongue 17a in the first seating position P1. The first seatbelt lock tongue 17a is allowed to slide along the first seatbelt 7a in a conventional manner.

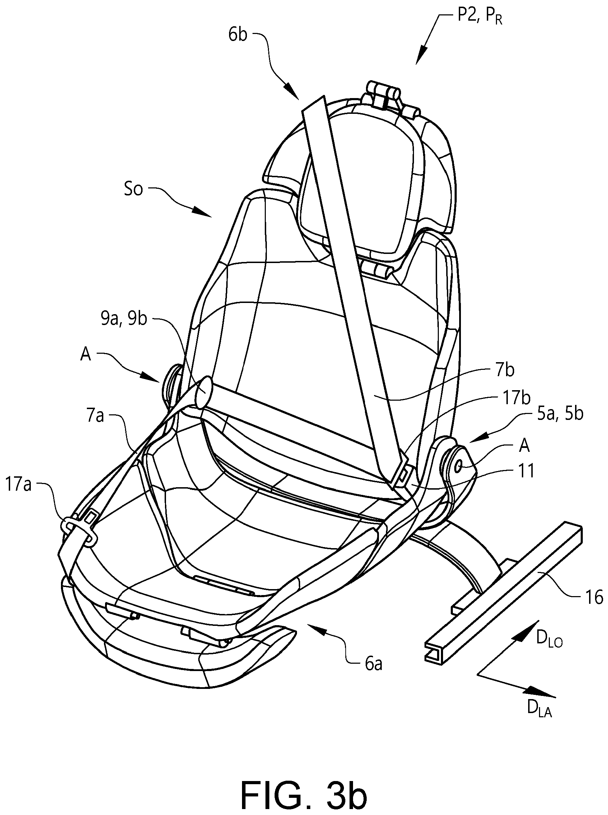

A second seatbelt lock tongue 17b is arranged on the second seatbelt 7b, and the second seatbelt lock tongue 17b is configured for being releasably connected to the seatbelt lock 11 in the second seating position P2, as illustrated in figure 3b. In this way, the second seatbelt 7b is configured for being releasably connected to the seatbelt lock 11 via the second seatbelt lock tongue 17b in the second seating position P2. The second seatbelt lock tongue 17b is allowed to slide along the second seatbelt 7b in a conventional manner.

When the vehicle seat 1 is arranged in the first seating position P1, usage of the first seatbelt system 4a is enabled due to the position of the vehicle seat 1. When a user of the vehicle V is seated in the vehicle seat 1 in the first seating position P1, the first seatbelt 7a can be secured across the chest and hips of the user. The first seatbelt 7a is arranged in a traditional way across the user with a section of the first seatbelt 7a extending across the hips and another section extending across the chest, as understood from the position of the first seatbelt 7a shown in figure 3a. When the first seatbelt 7a is released from the seatbelt retractor forming the first inner attachment point 8a, it may be extended from the first seatbelt channel 10a and arranged across the body of the user. The user may thereafter simply lock the first seatbelt lock tongue 17a to the seatbelt lock 11 for a secure attachment of the first seatbelt 7a. To unlock the first seatbelt 7a, the user is disconnecting the first seatbelt lock tongue 17a from the seatbelt lock 11, and the first seatbelt 7a may then be partly retracted into the seatbelt retractor via the first seatbelt channel 10a into the position shown in figures 2a and 4a.

When the vehicle seat 1 is arranged in the second seating position P2, usage of the second seatbelt system 4b is enabled due to the position of the vehicle seat 1. When a user of the vehicle V is seated in the vehicle seat 1 in the second seating position P2, the second seatbelt 7b can be secured across the chest and hips of the user. The second seatbelt 7b is arranged in a traditional way across the user with a section of the second seatbelt 7b extending across the hips and another section extending across the chest, as understood from the position of the second seatbelt 7b shown in figure 3b. When the second seatbelt 7b is released from the seatbelt retractor forming the second inner attachment point 8b, it may be extended from the second seatbelt channel 10b and arranged across the body of the user. The user may thereafter simply lock the second seatbelt lock tongue 17b to the seatbelt lock 11 for a secure attachment of the second seatbelt 7b. To unlock the second seatbelt 7b, the user is disconnecting the second seatbelt lock tongue 17b from the seatbelt lock 11, and the second seatbelt 7b may then be partly retracted into the seatbelt retractor via the second seatbelt channel 10b into the position indicated in figure 2c.

It will be appreciated that the above description is merely exemplary in nature and is not intended to limit the present invention. its application or uses. While specific examples have been described in the specification and illustrated in the drawings, it will be understood by those of ordinary skill in the art that various changes may be made and equivalents may be substituted for elements. but that the scope of the present invention will include any embodiments falling within the foregoing description and the appended claims. Reference signs mentioned in the claims should not be seen as limiting the extent of the matter protected by the claims, and their sole function is to make claims easier to understand.

### REFERENCE SIGNS

- 1:: Vehicle seat
- 1a:: First seat part
- 1b:: Second seat part
- 2:: Frame structure
- 3:: Vehicle structure
- 4a:: First seatbelt system
- 4b:: Second seatbelt system
- 5a:: First inner end
- 5b:: Second inner end
- 6a:: First outer end
- 6b:: Second outer end
- 7a:: First seatbelt
- 7b:: Second seatbelt
- 8a:: First inner attachment point
- 8b:: Second inner attachment point
- 9a:: First outer attachment point
- 9b:: Second outer attachment point
- 10a:: First seatbelt channel
- 10b:: Second seatbelt channel
- 11:: Seatbelt lock
- 12a:: First main actuator
- 12b:: Second main actuator
- 13a:: First outer seat section
- 13b:: Second outer seat section
- 14a:: First inner sub-section
- 14b:: Second inner sub-section
- 15a:: First outer sub-section
- 15b:: Second outer sub-section
- 16:: Rail structure
- 17a:: First seatbelt lock tongue
- 17b:: Second seatbelt lock tongue

- A:: Pivot axis
- B:: Backrest
- D_{LA}:: Lateral direction
- D_{LO}:: Longitudinal direction
- H:: Headrest
- P1:: First seating position
- P2:: Second seating position
- P_{F}:: Forwards position
- P_{INT}:: Intermediate position
- P_{R}:: Rearwards position
- S:: Seat system
- S_{O}:: Outer side
- SP:: Seat platform
- V:: Vehicle

## Claims

1. A seat system (S) for a vehicle (V) comprising a vehicle seat (1) and a frame structure (2), wherein the frame structure (2) is connected to a vehicle structure (3), wherein the vehicle seat (1) is pivotably arranged relative to the frame structure (2) around a pivot axis (A) and configured for pivoting around the pivot axis (A) between a first seating position (P1) and a second seating position (P2) opposite each other,
wherein the vehicle seat (1) comprises a first seat part (1a) and a second seat part (1b) connected to each other, wherein in the first seating position (P1) the first seat part (1a) is forming a backrest (B) and the second seat part (1b) is forming a seat platform (SP), and wherein in the second seating position (P2), the first seat part is forming a seat platform (SP) and the second seat part (1b) is forming a backrest (B),
wherein the vehicle seat (1) comprises an integrated first seatbelt system (4a) arranged in connection to the first seat part (1a), wherein the first seatbelt system (4a) is configured for being worn by a user of the vehicle (V) in the first seating position (P1),
wherein the vehicle seat (1) comprises an integrated second seatbelt system (4b) arranged in connection to the second seat part (1b), wherein the second seatbelt system (4b) is configured for being worn by a user of the vehicle (V) in the second seating position (P2),
wherein the first seat part (1a) comprises a first inner end (5a) and a first outer end (6a), wherein the first inner end (5a) is arranged in connection to the pivot axis (A), wherein the second seat part (1b) comprises a second inner end (5b) and a second outer end (6b), wherein the second inner end (5b) is arranged in connection to the pivot axis (A),
**characterized in that** the first seatbelt system (4a) comprises a first seatbelt (7a) integrated in the first seat part (1a), wherein the first seatbelt (7a) is extending from a first inner attachment point (8a) arranged in the first seat part (1a) in connection to the first inner end (5a) to a first outer attachment point (9a) arranged in connection to an outer side (S_{O}) of the first seat part (1a) at the first inner end (5a) via the first outer end (6a);
wherein the second seatbelt system (4b) comprises a second seatbelt (7b) integrated in the second seat part (1b), wherein the second seatbelt (7b) is extending from a second inner attachment point (8b) arranged in the second seat part (1b) in connection to the second inner end (5b) to a second outer attachment point (9b) arranged in connection to an outer side (S_{O}) of the second seat part (1b) at the second inner end (5b) via the second outer end (6b).

2. The seat system (S) according to claim 1,
wherein the first seat part (1a) comprises a first seatbelt channel (10a) extending between the first inner attachment point (8a) and the first outer end (6a), wherein the first seatbelt (7a) is extending in the first seatbelt channel (10a),
wherein the second seat part (1b) comprises a second seatbelt channel (10b) extending between the second inner attachment point (8b) and the second outer end (6b), wherein the second seatbelt (7b) is extending in the second seatbelt channel (10b).

3. The seat system (S) according to claim 2,
wherein the first inner attachment point (8a) is arranged as a seatbelt retractor configured for retracting and releasing the first seatbelt (7a), and wherein the second inner attachment point (8b) is arranged as a seatbelt retractor configured for retracting and releasing the second seatbelt (7b).

4. The seat system (S) according to any preceding claim,
wherein the vehicle seat (1) comprises a seatbelt lock (11) arranged on a lateral side of the vehicle seat (1) in connection to the pivot axis (A), wherein the seatbelt lock (11) is configured for releasably connecting the first seatbelt (7a) in the first seating position (P1) and releasably connecting the second seatbelt (7b) in the second seating position (P2).

5. The seat system (S) according to claim 4,
wherein the seatbelt lock (11) is positioned in connection to the pivot axis (A) and arranged on an opposite lateral side of the vehicle seat (1) relative to the first outer attachment point (9a) and the second outer attachment point (9b).

6. The seat system (S) according to any preceding claim,
wherein the vehicle seat (1) comprises a first outer seat section (13a) attached to the first outer end (6a) of the first seat part (1a), wherein the first outer seat section (13a) is pivotably arranged relative to the first seat part (1a) and is forming a headrest (H) in the first seating position (P1), and wherein the vehicle seat (1) comprises a second outer seat section (13b) attached to the second outer end (6b) of the second seat part (1b), wherein the second outer seat section (13b) is pivotably arranged relative to the second seat part (1b) and is forming a headrest (H) in the second seating position (P2).

7. The seat system (S) according to any preceding claim,
wherein each of the first seat part (1a) and the second seat part (1b) is pivotably arranged relative to the frame structure (2) around the pivot axis (A).

8. The seat system (S) according to any preceding claim,
wherein the first seat part (1a) is individually adjustable relative to the frame structure (2) and relative to the second seat part (1b), wherein the second seat part (1b) is individually adjustable relative to the frame structure (2) and relative to the first seat part (1a).

9. The seat system (S) according to claim 8,
wherein the seat system (S) further comprises a first main actuator (12a) and a second main actuator (12b) arranged in the vehicle seat (1), wherein the first main actuator (12a) is configured for enabling the individual adjustment of the first seat part (1a) relative to the frame structure (2) around the pivot axis (A), wherein the second main actuator (12b) is configured for enabling the individual adjustment of the second seat part (1b) relative to the frame structure (2) around the pivot axis (A).

10. The seat system (S) according to claim 9,
wherein the first main actuator (12a) is arranged as an electric motor, and the second main actuator (12b) is arranged as an electric motor.

11. The seat system (S) according to any preceding claim,
wherein the first seat part (1a) comprises a first inner sub-section (14a) and a first outer sub-section (15a) pivotably arranged relative to each other, and/or wherein the second seat part (1b) comprises a second inner sub-section (14b) and a second outer sub-section (15b) pivotably arranged relative to each other.

12. The seat system (S) according to any preceding claim,
wherein the frame structure (2) is connected to the vehicle structure (3) via a rail structure (16).

13. A vehicle comprising a seat system (S) according to any of claims 1-12.

14. A method for operating a seat system (S) of a vehicle (V) according to any of claims 1-12, wherein the method comprises the steps:
arranging the vehicle seat (1) in the first seating position (P1) for enabling usage of the first seatbelt system (4a), or arranging the vehicle seat (1) in the second seating position (P2) for enabling usage of the second seatbelt system (4b).

## Patentansprüche

1. Sitzsystem (S) für ein Fahrzeug (V), umfassend einen Fahrzeugsitz (1) und eine Rahmenkonstruktion (2), wobei die Rahmenkonstruktion (2) mit einer Fahrzeugkonstruktion (3) verbunden ist, wobei der Fahrzeugsitz (1) relativ zu der Rahmenkonstruktion (2) um eine Schwenkachse (A) schwenkbar angeordnet ist und dazu konfiguriert ist, um die Schwenkachse (A) zwischen einer ersten Sitzposition (P1) und einer zweiten Sitzposition (P2), die einander gegenüberliegen, geschwenkt zu werden,
wobei der Fahrzeugsitz (1) einen ersten Sitzteil (1a) und einen zweiten Sitzteil (1b), die miteinander verbunden sind, umfasst, wobei in der ersten Sitzposition (P1) der erste Sitzteil (1a) eine Rückenlehne (B) bildet und der zweite Sitzteil (1b) eine Sitzfläche (SP) bildet und wobei in der zweiten Sitzposition (P2) der erste Sitzteil eine Sitzfläche (SP) bildet und der zweite Sitzteil (1b) eine Rückenlehne (B) bildet,
wobei der Fahrzeugsitz (1) ein integriertes erstes Sicherheitsgurtsystem (4a) umfasst, das in Verbindung mit dem ersten Sitzteil (1a) angeordnet ist, wobei das erste Sicherheitsgurtsystem (4a) dazu konfiguriert ist, durch einen Benutzer des Fahrzeugs (V) in der ersten Sitzposition (P1) angelegt zu werden,
wobei der Fahrzeugsitz (1) ein integriertes zweites Sicherheitsgurtsystem (4b) umfasst, das in Verbindung mit dem zweiten Sitzteil (1b) angeordnet ist, wobei das zweite Sicherheitsgurtsystem (4b) dazu konfiguriert ist, durch einen Benutzer des Fahrzeugs (V) in der zweiten Sitzposition (P2) angelegt zu werden,
wobei der erste Sitzteil (1a) ein erstes inneres Ende (5a) und ein erstes äußeres Ende (6a) umfasst, wobei das erste innere Ende (5a) in Verbindung mit der Schwenkachse (A) angeordnet ist, wobei der zweite Sitzteil (1b) ein zweites inneres Ende (5b) und ein zweites äußeres Ende (6b) umfasst, wobei das zweite innere Ende (5b) in Verbindung mit der Schwenkachse (A) angeordnet ist, **dadurch gekennzeichnet, dass** das erste Sicherheitsgurtsystem (4a) einen ersten Sicherheitsgurt (7a) umfasst, der in den ersten Sitzteil (1a) integriert ist, wobei sich der erste Sicherheitsgurt (7a) von einem ersten inneren Befestigungspunkt (8a), der in dem ersten Sitzteil (1a) in Verbindung mit dem ersten inneren Ende (5a) angeordnet ist, zu einem ersten äußeren Befestigungspunkt (9a) erstreckt, der in Verbindung mit einer Außenseite (Sₒ) des ersten Sitzteils (1a) an dem ersten inneren Ende (5a) über das erste äußere Ende (6a) angeordnet ist;
wobei das zweite Sicherheitsgurtsystem (4b) einen zweiten Sicherheitsgurt (7b) umfasst, der in den zweiten Sitzteil (1b) integriert ist, wobei sich der zweite Sicherheitsgurt (7b) von einem zweiten inneren Befestigungspunkt (8b), der in dem zweiten Sitzteil (1b) in Verbindung mit dem zweiten inneren Ende (5b) angeordnet ist, zu einem zweiten äußeren Befestigungspunkt (9b) erstreckt, der in Verbindung mit einer Außenseite (Sₒ) des zweiten Sitzteils (1b) an dem zweiten inneren Ende (5b) über das zweite äußere Ende (6b) angeordnet ist.

2. Sitzsystem (S) nach Anspruch 1,
wobei der erste Sitzteil (1a) einen ersten Sicherheitsgurtkanal (10a) umfasst, der sich zwischen dem ersten inneren Befestigungspunkt (8a) und dem ersten äußeren Ende (6a) erstreckt, wobei sich der erste Sicherheitsgurt (7a) in dem ersten Sicherheitsgurtkanal (10a) erstreckt,
wobei der zweite Sitzteil (1b) einen zweiten Sicherheitsgurtkanal (10b) umfasst, der sich zwischen dem zweiten inneren Befestigungspunkt (8b) und dem zweiten äußeren Ende (6b) erstreckt, wobei sich der zweite Sicherheitsgurt (7b) in dem zweiten Sicherheitsgurtkanal (10b) erstreckt.

3. Sitzsystem (S) nach Anspruch 2,
wobei der erste innere Befestigungspunkt (8a) als ein Sicherheitsgurtaufroller angeordnet ist, der dazu konfiguriert ist, den ersten Sicherheitsgurt (7a) auf- und abzurollen, und wobei der zweite innere Befestigungspunkt (8b) als ein Sicherheitsgurtaufroller angeordnet ist, der dazu konfiguriert ist, den zweiten Sicherheitsgurt (7b) auf- und abzurollen.

4. Sitzsystem (S) nach einem der vorhergehenden Ansprüche,
wobei der Fahrzeugsitz (1) ein Sicherheitsgurtschloss (11) umfasst, das an einer Seitenfläche des Fahrzeugsitzes (1) in Verbindung mit der Schwenkachse (A) angeordnet ist, wobei das Sicherheitsgurtschloss (11) dazu konfiguriert ist, den ersten Sicherheitsgurt (7a) in der ersten Sitzposition (P1) lösbar zu verbinden und den zweiten Sicherheitsgurt (7b) in der zweiten Sitzposition (P2) lösbar zu verbinden.

5. Sitzsystem (S) nach Anspruch 4,
wobei das Sicherheitsgurtschloss (11) in Verbindung mit der Schwenkachse (A) positioniert und auf einer gegenüberliegenden Seitenfläche des Fahrzeugsitzes (1) relativ zu dem ersten äußeren Befestigungspunkt (9a) und dem zweiten äußeren Befestigungspunkt (9b) angeordnet ist.

6. Sitzsystem (S) nach einem der vorhergehenden Ansprüche,
wobei der Fahrzeugsitz (1) einen ersten äußeren Sitzabschnitt (13a) umfasst, der an dem ersten äußeren Ende (6a) des ersten Sitzteils (1a) befestigt ist, wobei der erste äußere Sitzabschnitt (13a) relativ zu dem ersten Sitzteil (1a) schwenkbar angeordnet ist und eine Kopfstütze (H) in der ersten Sitzposition (P1) bildet, und wobei der Fahrzeugsitz (1) einen zweiten äußeren Sitzabschnitt (13b) umfasst, der an dem zweiten äußeren Ende (6b) des zweiten Sitzteils (1b) befestigt ist, wobei der zweite äußere Sitzabschnitt (13b) relativ zu dem zweiten Sitzteil (1b) schwenkbar angeordnet ist und eine Kopfstütze (H) in der zweiten Sitzposition (P2) bildet.

7. Sitzsystem (S) nach einem der vorhergehenden Ansprüche,
wobei sowohl der erste Sitzteil (1a) als auch der zweite Sitzteil (1b) relativ zu der Rahmenkonstruktion (2) um die Schwenkachse (A) schwenkbar angeordnet sind.

8. Sitzsystem (S) nach einem der vorhergehenden Ansprüche,
wobei der erste Sitzteil (1a) relativ zu der Rahmenkonstruktion (2) und relativ zu dem zweiten Sitzteil (1b) individuell verstellbar ist, wobei der zweite Sitzteil (1b) relativ zu der Rahmenkonstruktion (2) und relativ zu dem ersten Sitzteil (1a) individuell verstellbar ist.

9. Sitzsystem (S) nach Anspruch 8,
wobei das Sitzsystem (S) ferner einen ersten Hauptaktuator (12a) und einen zweiten Hauptaktuator (12b) umfasst, die in dem Fahrzeugsitz (1) angeordnet sind, wobei der erste Hauptaktuator (12a) dazu konfiguriert ist, die individuelle Verstellung des ersten Sitzteils (1a) relativ zu der Rahmenkonstruktion (2) um die Schwenkachse (A) zu ermöglichen, wobei der zweite Hauptaktuator (12b) dazu konfiguriert ist, die individuelle Verstellung des zweiten Sitzteils (1b) relativ zu der Rahmenkonstruktion (2) um die Schwenkachse (A) zu ermöglichen.

10. Sitzsystem (S) nach Anspruch 9,
wobei der erste Hauptaktuator (12a) als ein Elektromotor angeordnet ist und der zweite Hauptaktuator (12b) als ein Elektromotor angeordnet ist.

11. Sitzsystem (S) nach einem der vorhergehenden Ansprüche,
wobei der erste Sitzteil (1a) einen ersten inneren Teilabschnitt (14a) und einen ersten äußeren Teilabschnitt (15a) umfasst, die relativ zueinander schwenkbar angeordnet sind, und/oder wobei der zweite Sitzteil (1b) einen zweiten inneren Teilabschnitt (14b) und einen zweiten äußeren Teilabschnitt (15b) umfasst, die relativ zueinander schwenkbar angeordnet sind.

12. Sitzsystem (S) nach einem der vorhergehenden Ansprüche,
wobei die Rahmenkonstruktion (2) mit der Fahrzeugkonstruktion (3) über eine Schienenkonstruktion (16) verbunden ist.

13. Fahrzeug, umfassend ein Sitzsystem (S) nach einem der Ansprüche 1-12.

14. Verfahren zum Betreiben eines Sitzsystems (S) eines Fahrzeugs (V) nach einem der Ansprüche 1-12, wobei das Verfahren folgende Schritte umfasst:
Anordnen des Fahrzeugsitzes (1) in der ersten Sitzposition (P1), um eine Nutzung des ersten Sicherheitsgurtsystems (4a) zu ermöglichen, oder Anordnen des Fahrzeugsitzes (1) in der zweiten Sitzposition (P2), um eine Nutzung des zweiten Sicherheitsgurtsystems (4b) zu ermöglichen.

## Revendications

1. Système de siège (S) pour un véhicule (V) comprenant un siège de véhicule (1) et une structure de cadre (2), dans lequel la structure de cadre (2) est raccordée à une structure de véhicule (3), dans lequel le siège de véhicule (1) est agencé de manière pivotante par rapport à la structure de cadre (2) autour d'un axe de pivotement (A) et configuré pour pivoter autour de l'axe de pivotement (A) entre une première position d'assise (P1) et une seconde position d'assise (P2) opposées l'une à l'autre,
dans lequel le siège de véhicule (1) comprend une première partie de siège (1a) et une seconde partie de siège (1b) raccordées l'une à l'autre, dans lequel dans la première position d'assise (P1) la première partie de siège (1a) forme un dossier (B) et la seconde partie de siège (1b) forme une plateforme de siège (SP), et dans lequel dans la seconde position d'assise (P2), la première partie de siège forme une plateforme de siège (SP) et la seconde partie de siège (1b) forme un dossier (B),
dans lequel le siège de véhicule (1) comprend un premier système de ceinture de sécurité intégré (4a) agencé en raccordement à la première partie de siège (1a), dans lequel le premier système de ceinture de sécurité (4a) est configuré pour être porté par un utilisateur du véhicule (V) dans la première position d'assise (P1),
dans lequel le siège de véhicule (1) comprend un second système de ceinture de sécurité intégré (4b) agencé en raccordement à la seconde partie de siège (1b), dans lequel le second système de ceinture de sécurité (4b) est configuré pour être porté par un utilisateur du véhicule (V) dans la seconde position d'assise (P2),
dans lequel la première partie de siège (1a) comprend une première extrémité interne (5a) et une première extrémité externe (6a), dans lequel la première extrémité interne (5a) est agencée en raccordement à l'axe de pivotement (A), dans lequel la seconde partie de siège (1b) comprend une seconde extrémité interne (5b) et une seconde extrémité externe (6b), dans lequel la seconde extrémité interne (5b) est agencée en raccordement à l'axe de pivotement (A),
**caractérisé en ce que** le premier système de ceinture de sécurité (4a) comprend une première ceinture de sécurité (7a) intégrée dans la première partie de siège (1a), dans lequel la première ceinture de sécurité (7a) s'étend à partir d'un premier point de fixation interne (8a) agencé dans la première partie de siège (1a) en raccordement à la première extrémité interne (5a) jusqu'à un premier point de fixation externe (9a) agencé en raccordement à un côté externe (S_{O}) de la première partie de siège (1a) au niveau de la première extrémité interne (5a) par l'intermédiaire de la première extrémité externe (6a) ;
dans lequel le second système de ceinture de sécurité (4b) comprend une seconde ceinture de sécurité (7b) intégrée dans la seconde partie de siège (1b), dans lequel la seconde ceinture de sécurité (7b) s'étend à partir d'un second point de fixation interne (8b) agencé dans la seconde partie de siège (1b) en raccordement à la seconde extrémité interne (5b) jusqu'à un second point de fixation externe (9b) agencé en raccordement à un côté externe (S_{O}) de la seconde partie de siège (1b) au niveau de la seconde extrémité interne (5b) par l'intermédiaire de la seconde extrémité externe (6b).

2. Système de siège (S) selon la revendication 1,
dans lequel la première partie de siège (1a) comprend un premier canal de ceinture de sécurité (10a) s'étendant entre le premier point de fixation interne (8a) et la première extrémité externe (6a), dans lequel la première ceinture de sécurité (7a) s'étend dans le premier canal de ceinture de sécurité (10a),
dans lequel la seconde partie de siège (1b) comprend un second canal de ceinture de sécurité (10b) s'étendant entre le second point de fixation interne (8b) et la seconde extrémité externe (6b), dans lequel la seconde ceinture de sécurité (7b) s'étend dans le second canal de ceinture de sécurité (10b).

3. Système de siège (S) selon la revendication 2,
dans lequel le premier point de fixation interne (8a) est agencé sous la forme d'un enrouleur de ceinture de sécurité configuré pour rétracter et libérer la première ceinture de sécurité (7a), et dans lequel le second point de fixation interne (8b) est agencé sous la forme d'un enrouleur de ceinture de sécurité configuré pour rétracter et libérer la seconde ceinture de sécurité (7b).

4. Système de siège (S) selon toute revendication précédente,
dans lequel le siège de véhicule (1) comprend une boucle de ceinture de sécurité (11) agencée sur un côté latéral du siège de véhicule (1) en raccordement à l'axe de pivotement (A), dans lequel la boucle de ceinture de sécurité (11) est configurée pour raccorder de manière libérable la première ceinture de sécurité (7a) dans la première position d'assise (P1) et raccorder de manière libérable la seconde ceinture de sécurité (7b) dans la seconde position d'assise (P2).

5. Système de siège (S) selon la revendication 4,
dans lequel la boucle de ceinture de sécurité (11) est positionnée en raccordement à l'axe de pivotement (A) et agencée sur un côté latéral opposé du siège de véhicule (1) par rapport au premier point de fixation externe (9a) et au second point de fixation externe (9b).

6. Système de siège (S) selon toute revendication précédente,
dans lequel le siège de véhicule (1) comprend une première section de siège externe (13a) fixée à la première extrémité externe (6a) de la première partie de siège (1a), dans lequel la première section de siège externe (13a) est agencée de manière pivotante par rapport à la première partie de siège (1a) et forme un appui-tête (H) dans la première position d'assise (P1), et dans lequel le siège de véhicule (1) comprend une seconde section de siège externe (13b) fixée à la seconde extrémité externe (6b) de la seconde partie de siège (1b), dans lequel la seconde section de siège externe (13b) est agencée de manière pivotante par rapport à la seconde partie de siège (1b) et forme un appui-tête (H) dans la seconde position d'assise (P2).

7. Système de siège (S) selon toute revendication précédente,
dans lequel chacune de la première partie de siège (1a) et de la seconde partie de siège (1b) est agencée de manière pivotante par rapport à la structure de cadre (2) autour de l'axe de pivotement (A).

8. Système de siège (S) selon toute revendication précédente,
dans lequel la première partie de siège (1a) est réglable individuellement par rapport à la structure de cadre (2) et par rapport à la seconde partie de siège (1b), dans lequel la seconde partie de siège (1b) est réglable individuellement par rapport à la structure de cadre (2) et par rapport à la première partie de siège (1a).

9. Système de siège (S) selon la revendication 8,
dans lequel le système de siège (S) comprend en outre un premier actionneur principal (12a) et un second actionneur principal (12b) agencés dans le siège de véhicule (1), dans lequel le premier actionneur principal (12a) est configuré pour permettre le réglage individuel de la première partie de siège (1a) par rapport à la structure de cadre (2) autour de l'axe de pivotement (A), dans lequel le second actionneur principal (12b) est configuré pour permettre le réglage individuel de la seconde partie de siège (1b) par rapport à la structure de cadre (2) autour de l'axe de pivotement (A).

10. Système de siège (S) selon la revendication 9,
dans lequel le premier actionneur principal (12a) est agencé en tant que moteur électrique, et le second actionneur principal (12b) est agencé en tant que moteur électrique.

11. Système de siège (S) selon toute revendication précédente,
dans lequel la première partie de siège (1a) comprend une première sous-section interne (14a) et une première sous-section externe (15a) agencées de manière pivotante l'une par rapport à l'autre, et/ou dans lequel la seconde partie de siège (1b) comprend une seconde sous-section interne (14b) et une seconde sous-section externe (15b) agencées de manière pivotante l'une par rapport à l'autre.

12. Système de siège (S) selon toute revendication précédente,
dans lequel la structure de cadre (2) est raccordée à la structure de véhicule (3) par l'intermédiaire d'une structure de rail (16).

13. Véhicule comprenant un système de siège (S) selon l'une quelconque des revendications 1 à 12.

14. Procédé pour faire fonctionner un système de siège (S) d'un véhicule (V) selon l'une quelconque des revendications 1 à 12, dans lequel le procédé comprend les étapes :
l'agencement du siège de véhicule (1) dans la première position d'assise (P1) pour permettre l'utilisation du premier système de ceinture de sécurité (4a), ou l'agencement du siège de véhicule (1) dans la seconde position d'assise (P2) pour permettre l'utilisation du second système de ceinture de sécurité (4b).
